# EUROPÄISCHE PATENTSCHRIFT

(11) **EP 1 621 115 B1**
(45) Veröffentlichungstag und Bekanntmachung des Hinweises auf die Patenterteilung: **02.09.2015**
(21) Anmeldenummer: 05106478.0
(22) Anmeldetag: 14.07.2005
(51) Int. Cl.: A47J 41/00

(54) **Warmhalte- oder Isolierkanne mit einem Deckel**
Thermally insulated vessel with a lid
Récipient isolant avec un couvercle

(30) Priorität: 30.07.2004 DE 202004011919 U
(43) Veröffentlichungstag der Anmeldung: 01.02.2006
(73) Patentinhaber: Melitta Europa GmbH & Co. KG, 32427 Minden (DE)
(72) Erfinder: Ostermeier, Jürgen, 31675 Bückeburg (DE); Sachtleben, Andreas, 32427 Minden (DE)
(74) Vertreter: Dantz, Jan Henning

(56) Entgegenhaltungen:
- US-A- 5 144 112
- US-A1- 2003 012 256

## Beschreibung

Die vorliegende Erfindung betrifft eine Warmhalte- oder Isolierkanne mit einem Deckel. gemäss dem Oberbegriff von Anspruch 1.

Kannen der vorerwähnten Art sind an sich bekannt und werden überwiegend zur Aufnahme von Heißgetränken wie Kaffee oder Tee benutzt. In Warmhalte- oder Isolierkannen können Heißgetränke über einen längeren Zeitraum auf Trinktemperatur gehalten werden.

Bei dem bisher bekannten Warmhalte- oder Isolierkannen mit einem Deckel kann ein Verbraucher allerdings nicht ohne weiteres feststellen, ob ein in der Kanne befindliches Getränk noch die erforderliche Trinktemperatur aufweist. Um dies festzustellen, muss der Verbraucher bislang zumindest einen Teil des Getränkes in ein Trinkgefäß einfüllen um dann zu probieren, ob die Temperatur des Getränkes noch akzeptabel ist oder nicht.

Das Dokument US 2003/0012256 offenbart eine Thermokaraffe, die mit einem internen Wärmesensor ausgestattet ist. Auf einem Deckel ist ein Display vorgesehen, auf dem die Temperatur des Inhalts der Thermokaraffe angezeigt wird.

Der vorliegenden Erfindung liegt die Aufgabe zugrunde, eine Warmhalte- oder Isolierkanne der gattungsgemäßen Art zu schaffen, die schon von außen erkennen lässt, ob ein in der Kanne befindliches Getränk noch eine ausreichende Trinktemperatur aufweist oder nicht.

Diese Aufgabe wird wie im Kennzeichen von Anspruch 1 definiert dadurch gelöst, dass der Deckel von einem Wärmeleitstift durchtreten ist, welcher mit einem im sichtbaren äußeren Deckelbereich platzierend Thermochrom-Element verbunden ist, und der Wärmeleitstift an seinem im äußeren Deckelbereich liegenden Ende eine topfartige Aufnahme aufweist, in welcher das Thermochrom-Element angeordnet ist.

Durch diese vergleichsweise einfache und auch lediglich geringe kostenverursachende Maßnahme ist schon bei äußerer Betrachtung einer erfindungsgemäßen Kanne erkennbar, ob ein darin befindliches Getränk noch eine ausreichende Trinktemperatur aufweist oder nicht, da das Thermochrom-Element seine Farbe in Abhängigkeit von seinem Temperaturzustand ändert und dieser Temperaturzustand von der Temperatur eines in der Kanne befindlichen Getränkes bestimmt wird. Über den Wärmeleitstift wird das Thermochrom-Element in Abhängigkeit von der Innentemperatur in der Kanne mehr oder weniger stark erwärmt, wodurch sich die Farbe des Thermochrom-Elementes verändert.

So kann das Thermochrom-Element beispielsweise so ausgelegt sein, dass dessen Farbe bei Vorhandensein einer hohen Innentemperatur in der Kanne - entsprechend einer hohen Temperatur des eingefüllten Getränkes- rot und nach Absinken der Innentemperatur auf ein deutlich niedriges Niveau gelb ist. Somit kann ein Verbraucher bei Betrachten des Thermochrom-Elementes sofort erkennen, ob ein in der Kanne befindliches Getränk noch die erforderliche Trinktemperatur aufweist oder nicht.

Weitere Merkmale der Erfindung sind Gegenstand von Unteransprüchen.

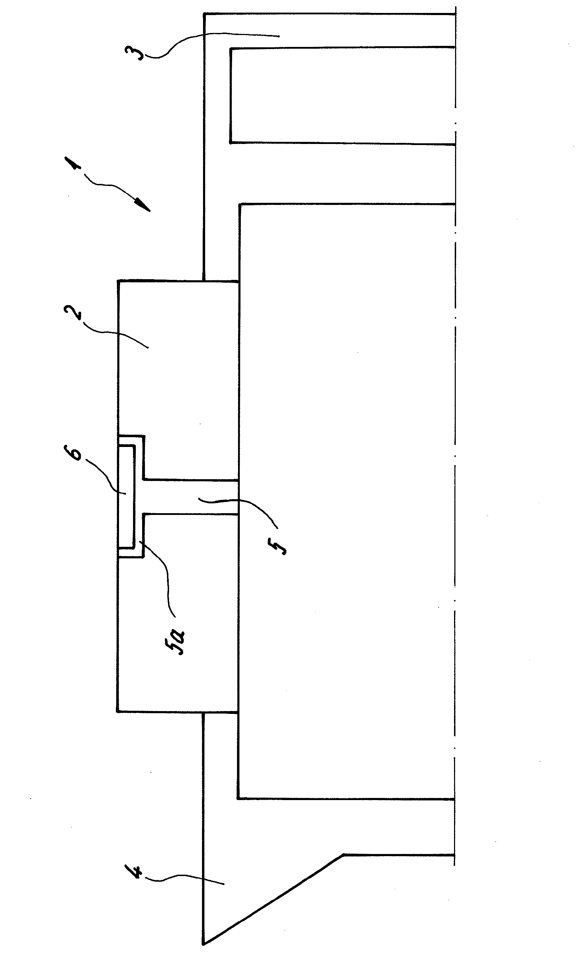

Ein Ausführungsbeispiel der Erfindung wird unter Bezugnahme auf die beigefügte Zeichnung im Folgenden näher beschrieben.

Die Zeichnung zeigt einen stark schematisierten Vertikalschnitt durch den oberen Endbereich einer erfindungsgemäßen Warmhalte- oder Isolierkanne mit einem Deckel.

In der Zeichnung ist mit dem Bezugszeichen 1 insgesamt eine nur teilweise dargestellte Warmhalte- oder Isolierkanne bezeichnet, die über einen Deckel 2 verschließbar ist.

Die Warmhalte- oder Isolierkanne 1 weist einen Handgriff 3 und eine Ausgießschnaupe 4 auf.

Innerhalb des Deckels 2 ist ein Wärmeleitstift 5 angeordnet, der den Deckel 2 vollständig durchtritt.

Der Wärmeleitstift 5 ist an seinem im äußeren Deckelbereich liegenden Ende zu einer topfartigen Aufnahme 5a aufgeweitet. Innerhalb dieser topfartigen Aufnahme 5a befindet sich ein Thermochrom-Element 6, welches seine Farbe in Abhängigkeit von seiner Temperatur verändert.

Der Wärmleitstift 5 ist aus einem gut wärmeleitfähigen Metall hergestellt, das Thermochrom-Element 6 ist aus Kunststoff gefertigt.

Bevorzugt ist der Wärmeleitstift 5 mit dem kontaktierenden Thermochrom-Element 6 im Zentrum des Deckels 2 angeordnet.

Der Wärmeleitstift 5 und/oder das Thermochrom-Element 6 schließen im montierten Zustand bündig mit der Deckelaußenfläche ab. Innenseitig schließt der Wärmeleitstift 5 analog mit der Innenfläche des Deckels 2 ab, so dass keine überstehenden und Verunreinigungen ermöglichende Bereiche gebildet sind. Außerdem lässt sich durch den glatten Abschluss der Deckel 2 einfach und bequem reinigen.

Der Deckel 2 selbst kann aus einem geeigneten Kunststoff bestehen. Der Wärmeleitstift 5 nebst dem Thermochrom-Element 6 kann in dem Deckel 2 verklebt oder verpresst oder formschlüssig festgelegt sein.

Das Gleiche gilt für die Verbindung zwischen dem Thermochrom-Element 6 und dem Wärmeleitstift 5.

In jedem Falle sollte eine abdichtende Verbindung zwischen dem Wärmeleitstift 5 und dem Deckel 2 verwirklicht werden, um unnötige Wärmeverluste durch Undichtigkeiten zu vermeiden.

## Patentansprüche

1. Warmhalte- oder Isolierkanne (1) mit einem Deckel (2), wobei der Deckel (2) von einem Wärmeleitstift (5) durchtreten ist, **dadurch gekennzeichnet, dass** der Wärmeleitstift (5) mit einem im sichtbaren äußeren Deckelbereich platzierten Thermochrom-Element (6) verbunden ist, und der Wärmeleitstift (5) an seinem im äußeren Deckelbereich liegenden Ende eine topfartige Aufnahme (5a) aufweist, in welcher das Thermochrom-Element (6) angeordnet ist.

2. Warmhalte- oder Isolierkanne nach Anspruch 1, **dadurch gekennzeichnet, dass** der Wärmeleitstift (5) aus einem Metall, vorzugsweise aus einem hochwärmeleitfähigen Metall, besteht.

3. Warmhalte- oder Isolierkanne nach einem der vorhergehenden Ansprüche, **dadurch gekennzeichnet, dass** das Thermochrom-Element (6) aus Kunststoff hergestellt ist.

4. Warmhalte- oder Isolierkanne nach einem der vorhergehenden Ansprüche, **dadurch gekennzeichnet, dass** der Wärmeleitstift (5) nebst Thermochrom-Element (6) im Zentrum des Deckels (2) angeordnet sind.

5. Warmhalte- oder Isolierkanne nach einem der vorhergehenden Ansprüche, **dadurch gekennzeichnet, dass** der Wärmeleitstift (5) und/oder das Thermochrom-Element (6) bündig mit der Deckelaußenfläche abschließt.

6. Warmhalte- oder Isolierkanne nach einem der vorhergehenden Ansprüche, **dadurch gekennzeichnet, dass** der Wärmeleitstift (5) bündig mit der Deckelinnenfläche abschließt.

7. Warmhalte- oder Isolierkanne nach einem der vorhergehenden Ansprüche, **dadurch gekennzeichnet, dass** der Wärmeleitstift (5) nebst dem Thermochrom-Element (6) abdichtend in den Deckel (2) eingefügt ist.

8. Warmhalte- oder Isolierkanne nach einem der vorhergehenden Ansprüche, **dadurch gekennzeichnet, dass** der Deckel (2) aus Kunststoff hergestellt ist.

## Claims

1. Vessel (1), which has a lid (2), for keeping warm or insulating, wherein the lid (2) is penetrated by a thermally conductive pin (5), **characterised in that** the thermally conductive pin (5) is connected with a thermochromic element (6) disposed in the visible outer lid region, and the thermally conductive pin (5) has at its end lying in the outer lid region a pot-like receptacle (5a) in which the thermochromic element (6) is arranged.

2. Vessel for keeping warm or insulating according to claim 1, **characterised in that** the thermally conductive pin (5) consists of a metal, preferably of a metal with a high thermal conduction capability.

3. Vessel for keeping warm or insulating according to one of the preceding claims, **characterised in that** the thermochromic element (6) is made of plastics material.

4. Vessel for keeping warm or insulating according to any one of the preceding claims, **characterised in that** the thermally conductive pin (5) together with the thermochromic element (6) is arranged in the centre of the lid (2).

5. Vessel for keeping warm or insulating according to any one of the preceding claims, **characterised in that** the thermally conductive pin (5) and/or the thermochromic element (6) is or are flush with the lid outer surface.

6. Vessel for keeping warm or insulating according to any one of the preceding claims, **characterised in that** the thermally conductive pin (5) is flush with the lid inner surface.

7. Vessel for keeping warm or insulating according to any one of the preceding claims, **characterised in that** the thermally conductive pin (5) together with the thermochromic element (6) is sealingly inserted into the lid (2).

8. Vessel for keeping warm or insulating according to any one of the preceding claims, **characterised in that** the lid (2) is made of plastics material.

## Revendications

1. Bidon (1) isolant ou de conservation de la chaleur comprenant un couvercle (2) traversé par une broche thermiquement conductrice (5),
**caractérisé en ce que**
la broche thermiquement conductrice (5) est reliée à un élément thermo-chromique (6) positionné dans la zone externe visible du couvercle, et la broche thermiquement conductrice (5) comporte, au niveau de son extrémité située dans la zone externe du couvercle un logement en forme de pot (5a) dans lequel est positionné l'élément thermo-chromique (6).

2. Bidon isolant ou de conservation de la chaleur conforme à la revendication 1,
**caractérisé en ce que**
la broche thermiquement conductrice (5) est réalisée en un métal, de préférence en un métal fortement conducteur de la chaleur.

3. Bidon isolant ou de conservation de la chaleur conforme à l'une des revendications précédentes,
**caractérisé en ce que**
l'élément thermo-chromique (6) est réalisé en métal.

4. Bidon isolant ou de conservation de la chaleur conforme à l'une des revendications précédentes,
**caractérisé en ce que**
la broche thermiquement conductrice (5) et l'élément thermo-chromique (6) sont situés au centre du couvercle (2).

5. Bidon isolant ou conservateur de la chaleur conforme à l'une des revendications précédentes,
**caractérisé en ce que**
la broche thermiquement conductrice (5) et/ou l'élément thermo-chromique (6) affleure(nt) sur la surface externe du couvercle.

6. Bidon isolant ou de conservation de la chaleur conforme à l'une des revendications précédentes,
**caractérisé en ce que**
la broche thermiquement conductrice (5) affleure sur la surface interne du couvercle.

7. Bidon isolant ou de conservation de la chaleur conforme à l'une des revendications précédentes,
**caractérisé en ce que**
la broche thermiquement conductrice (5) et l'élément thermo-chromique (6) sont insérés de manière étanche dans le couvercle (2).

8. Bidon isolant ou de conservation de la chaleur conforme à l'une des revendications précédentes,
**caractérisé en ce que**
le couvercle (2) est réalisé en matériau synthétique.
